# FASCICULE DE BREVET EUROPEEN

(11) **EP 3 109 683 B1**
(45) Date de publication et mention de la délivrance du brevet: **14.02.2018**
(21) Numéro de dépôt: 16173660.8
(22) Date de dépôt: 09.06.2016
(51) Int. Cl.: G02B 6/44

(54) **BOITIER DE RACCORDEMENT DE FIBRES OPTIQUES**
ANSCHLUSSKASTEN FÜR GLASFASERKABEL
BOX FOR CONNECTING OPTICAL FIBRES

(30) Priorité: 24.06.2015 FR 1555808
(43) Date de publication de la demande: 28.12.2016
(73) Titulaire: Nexans, 92400 Courbevoie (FR)
(72) Inventeur: MONATLIK, Jean-Christophe, 78400 CHATOU (FR); MILANOWSKI, Michel, 60540 ANSERVILLE (FR)
(74) Mandataire: Lenne, Laurence

(56) Documents cités:
- WO-A2-2009/089327
- WO-A2-2011/107181

## Description

L'invention concerne un boîtier de raccordement de fibres optiques.

Elle se rapporte plus précisément à un boîtier de raccordement de fibres optiques d'un câble principal à des fibres optiques d'un utilisateur comprenant un logement arrière du câble principal, un support de connecteurs et une cassette de lovage des fibres constitués dans un corps de boîtier pourvu d'un fond de fermeture délimitant ledit logement arrière et une partie avant montée en liaison pivotante sur le corps du boîtier.

Le document de brevet EP 2 388 632 décrit un boîtier de raccordement de fibres optiques d'un câble principal à des fibres optiques d'un utilisateur qui comprend un corps de boîtier et une cassette de lovage de fibres et de maintien d'épissures montée en liaison pivotante sur le corps du boîtier au moyen d'une charnière.

Le corps de boîtier comporte un logement arrière destiné au logement du câble principal contre un mur ou équivalent et donc d'épaisseur au moins égale au diamètre de ce câble. Il comporte également un logement avant pourvu de dispositifs de maintien de connecteurs qui est recouvert par la cassette pivotante en position montée et fermée. Boîtier et cassette sont recouverts par un couvercle de fermeture.

Un tel boîtier de raccordement de fibres optiques pose les problèmes techniques suivants.

Il présente une épaisseur totale relativement grande. En effet, cette épaisseur est la somme de l'épaisseur du logement arrière, du logement avant, de la cassette et du couvercle. Ceci pose un problème de contrainte d'encombrement et est préjudiciable aux besoins esthétiques.

Par ailleurs, lorsque le boîtier est ouvert, c'est-à-dire lorsque son couvercle est enlevé, la cassette est directement accessible avec ses fibres optiques lovées et ces dernières peuvent aisément être endommagées accidentellement.

Par ailleurs, le document de brevet WO 2009/089927 décrit un boîtier de dérivation de fibres optiques d'un câble principal à des fibres optiques d'utilisateur comprenant une base, un couvercle support de connecteurs et une cassette de lovage des fibres, constitués dans un corps de boîtier pourvu d'un fond de fermeture délimitant la base et d'une partie avant montée en liaison pivotante sur le corps du boîtier à proximité d'une de ses parois latérales. La cassette est disposée dans la base et délimite un canal arrière de logement du câble principal.

Un tel boîtier de dérivation ne présente pas de contrainte d'encombrement comparable à celle d'un boîtier de raccordement de fibres optiques d'un câble principal à des fibres optiques d'un utilisateur final qui est destiné à être installé dans un logement. WO2009/089327 A2 décrit un boîtier de dérivation de fibres optiques selon le préambule de la revendication 1. L'invention résout ces problèmes en proposant un boîtier de raccordement de fibres optiques d'un câble principal à des fibres optiques d'un utilisateur final, d'épaisseur minimisé.

Pour ce faire, l'invention propose un boîtier de raccordement de fibres optiques d'un câble principal à des fibres optiques d'un utilisateur final comprenant un logement arrière du câble principal, un support de connecteurs et une cassette de lovage des fibres, constitués dans un corps de boîtier pourvu d'un fond de fermeture délimitant ledit logement arrière et une partie avant montée en liaison pivotante sur le corps du boîtier à proximité d'une de ses parois latérales, ladite partie avant pivotante étant ledit support de connecteurs, caractérisé en ce que ledit logement arrière est ouvert vers l'arrière et en ce que ladite cassette est conformée par moulage dans ledit fond du corps de boîtier et délimite un canal arrière de logement du câble principal.

Un tel boîtier de raccordement est d'encombrement très réduit et compact d'une surface de l'ordre de 8 cm sur 8 cm avec une épaisseur de l'ordre de 25 mm.

Lorsque le couvercle est enlevé, la cassette et les fibres sont recouvertes du support de connecteurs et les fibres ne peuvent donc être détériorées, sans action volontaire de déploiement de ce support de connecteurs.

Selon un mode de réalisation préféré, ladite cassette est disposée complètement dans ledit logement arrière.

Avantageusement, ledit canal arrière entoure ladite cassette.

Ledit corps de boîtier peut comporter une entrée latérale dudit câble principal dans chaque paroi latérale dudit logement arrière.

Ladite cassette peut comprendre au moins un support d'épissure.

Avantageusement, ledit support de connecteurs comporte au moins une languette d'encliquetage sur ledit fond du corps de boîtier.

L'invention est décrite ci-après plus en détail à l'aide de figures représentant uniquement un mode de réalisation préféré de l'invention.
La figure 1 est une vue en perspective d'un boîtier de raccordement conforme à l'invention.
La figure 2 est une vue en perspective d'un boîtier de raccordement conforme à l'invention, dont le couvercle est enlevé.
Les figures 3 et 4 sont des vues avant et arrière en perspective d'un boîtier de raccordement conforme à l'invention, en position déployée.

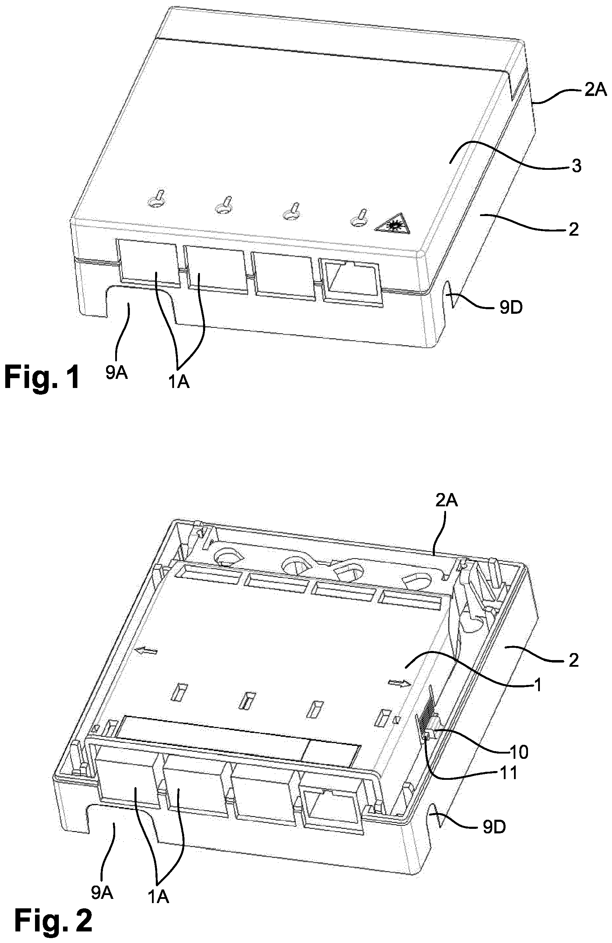

Comme visible sur les figures 1 et 2, un boîtier de raccordement de fibres optiques d'un câble principal à des fibres optiques d'un utilisateur final comprend un support 1 de connecteurs 1A constitué d'une partie avant montée en liaison pivotante sur le corps 2 du boîtier à proximité d'une de ses parois latérales 2A.

Sur la figure 1, un couvercle 3 ferme le corps 2 du boîtier.

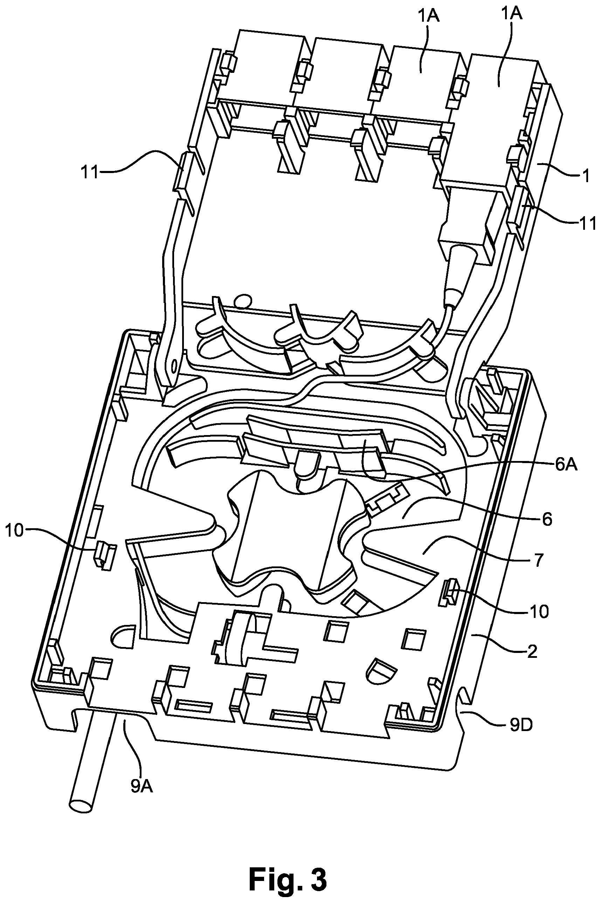

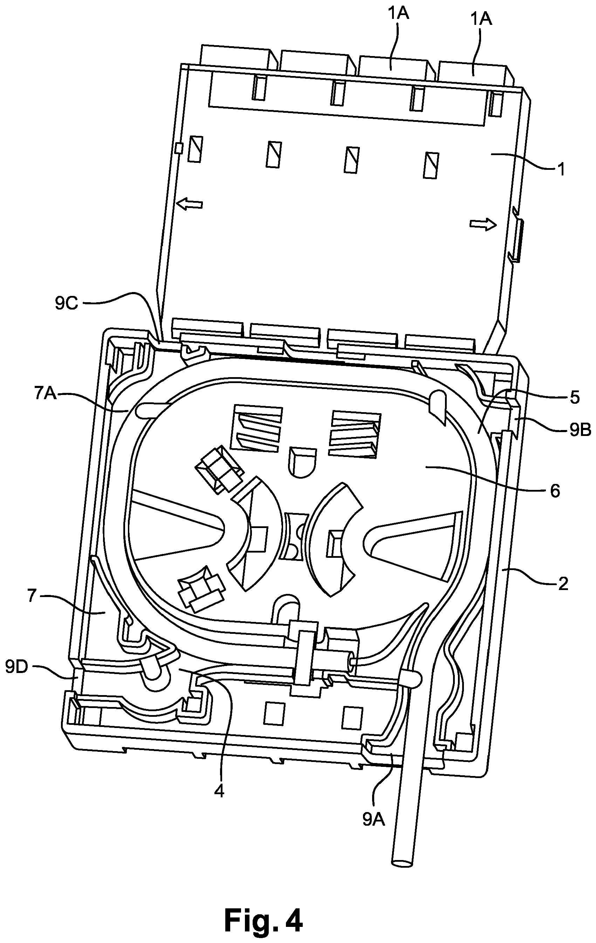

De façon plus visible sur les figures 3 et 4, où le support 1 de connecteurs est pivoté en position déployée, ce boîtier de raccordement comprend un logement arrière 4 du câble principal 5, ouvert vers l'arrière, et une cassette 6 de lovage des fibres qui peut comprendre au moins un support d'épissure 6A, constitués dans le corps 2 de boîtier pourvu d'un fond de fermeture 7 délimitant le logement arrière 4.

La cassette 6 est conformée par moulage dans ce fond 7 du corps de boîtier avec un canal arrière 7A de logement du câble principal entourant la cassette 6, la cassette étant disposée complètement dans le logement arrière 4.

Le corps 2 de boîtier comporte une entrée latérale 9A à 9D du câble principal dans chaque paroi latérale du logement arrière 4 ou du corps 2 de boîtier. Ces entrées peuvent être fermées par un opercule sécable.

Comme représenté sur la figure 2, en position replié, le support 1 de connecteurs est fixé sur le fond de fermeture 7 du corps de boîtier par des languettes d'encliquetage 10, 11 latérales.

Un câble préconnectorisé, c'est-à-dire préparé avec un connecteur correspondant, ou non peut être installé dans un tel boîtier de raccordement.

Dans le second cas, les fibres optiques en sortie du câble principal 5 peuvent être totalement tubées jusqu'aux connecteurs 1A ou être nues et connectées au niveau du support d'épissure 6A.

## Revendications

1. Boîtier de raccordement de fibres optiques d'un câble principal (5) à des fibres optiques d'un utilisateur final comprenant un logement arrière (4) du câble principal, un support (1) de connecteurs (1A) et une cassette (6) de lovage des fibres, constitués dans un corps (2) de boîtier pourvu d'un fond de fermeture (7) délimitant ledit logement arrière et une partie avant montée en liaison pivotante sur le corps (2) du boîtier à proximité d'une de ses parois latérales (2A), ladite partie avant pivotante étant ledit support (1) de connecteurs, **caractérisé en ce que** ledit logement arrière (4) est ouvert vers l'arrière et **en ce que** ladite cassette (6) est conformée par moulage dans ledit fond (7) du corps de boîtier et délimite un canal arrière (7A) de logement du câble principal (5).

2. Boîtier selon la revendication 1, **caractérisée en ce que** ladite cassette (6) est disposée complètement dans ledit logement arrière.

3. Boîtier selon la revendication 1 ou 2, **caractérisée en ce que** ledit canal arrière (7A) entoure ladite cassette (6).

4. Boîtier selon l'une des revendications précédentes, **caractérisé en ce que** ledit corps (2) de boîtier comporte une entrée latérale (9A, 9B, 9C, 9D) dudit câble principal (5) dans chaque paroi latérale dudit logement arrière.

5. Boîtier selon l'une des revendications précédentes, **caractérisé en ce que** ladite cassette (6) comprend au moins un support d'épissure (6A).

6. Boîtier selon l'une des revendications précédentes, **caractérisé en ce que** ledit support (1) de connecteurs comporte au moins une languette d'encliquetage (11) sur ledit fond (7) du corps de boîtier.

## Patentansprüche

1. Anschlusskasten für Glasfaserkabel eines Hauptkabels (5) an Glasfaserkabel eines Endnutzers, umfassend eine hintere Aufnahme (4) des Hauptkabels, einen Träger (1) von Verbindern (1A) und eine Spleißkassette (6) der Drähte, ausgebildet in einem Kastenkörper (2), ausgestattet mit einem Verschlussboden (7), der die hintere Aufnahme begrenzt, und einem vorderen Teil, der in Schwenkverbindung auf dem Kastenkörper (2) in der Nähe einer seiner Seitenwände (2A) montiert ist, wobei der schwenkende vordere Teil der Verbinderträger (1) ist, **dadurch gekennzeichnet, dass** die hintere Aufnahme (4) nach hinten offen ist und dass die Kassette (6) durch Formen im Boden (7) des Kastenkörpers ausgebildet ist und einen hinteren Aufnahmekanal (7A) des Hauptkabels (5) begrenzt.

2. Kasten nach Anspruch 1, **dadurch gekennzeichnet, dass** die Kassette (6) vollständig in der hinteren Aufnahme angeordnet ist.

3. Kasten nach Anspruch 1 oder 2, **dadurch gekennzeichnet, dass** der hintere Kanal (7A) die Kassette (6) umgibt.

4. Kasten nach einem der vorangehenden Ansprüche, **dadurch gekennzeichnet, dass** der Kastenkörper (2) einen Seiteneingang (9A, 9B, 9C, 9D) des Hauptkabels (5) in jede Seitenwand der hinteren Aufnahme aufweist.

5. Kasten nach einem der vorangehenden Ansprüche, **dadurch gekennzeichnet, dass** die Kassette (6) mindestens einen Spleißungsträger (6A) umfasst.

6. Kasten nach einem der vorangehenden Ansprüche, **dadurch gekennzeichnet, dass** der Verbinderträger (1) mindestens eine Rastzunge (11) auf dem Boden (7) des Kastenkörpers aufweist.

## Claims

1. A box for connecting optical fibers of a main trunk (5) to optical fibers of an end user comprising a rear housing (4) of the trunk cable, a support (1) for connectors (1A) and a cassette (6) for coiling the fibers, formed in a box body (2) provided with a closing bottom (7) limiting said rear housing and a front part mounted in pivoting connection on the body (2) of the box near one of its side walls (2A), said pivoting front part being said connector support (1), **characterized in that** said rear housing (4) is open toward the rear and **in that** said cartridge (6) is formed by molding in said bottom (7) of the box body and delimits a rear channel (7A) for housing the trunk cable (5).

2. The box according to claim 1, **characterized in that** said cassette (6) is positioned completely in said rear housing.

3. The box according to claim 1 or 2, **characterized in that** said rear channel (7A) surrounds said cassette (6).

4. The box according to one of the preceding claims, **characterized in that** said box body (2) includes a side inlet (9A, 9B, 9C, 9D) of said trunk cable (5) in each side wall of said rear housing.

5. The box according to one of the preceding claims, **characterized in that** said cassette (6) comprises at least one splice support (6A).

6. The box according to one of the preceding claims, **characterized in that** said connector support (1) includes at least one snapping tongue (11) on said bottom (7) of the box body.
